# EUROPÄISCHE PATENTANMELDUNG

(11) **EP 0 969 269 A2**
(43) Veröffentlichungstag der Anmeldung: **05.01.2000**
(21) Anmeldenummer: 99112464.5
(22) Anmeldetag: 01.07.1999
(51) Int. Cl.: G01F 11/26

(54) **Dosierkappe für fliessfähige oder schüttfähige Medien**

(30) Priorität: 01.07.1998 DE 29811680 U
(71) Anmelder: Yankee Polish Lüth GmbH + Co., 21465 Reinbek (DE)
(72) Erfinder: Franz, Dieter, 21465 Wentorf (DE)
(74) Vertreter: Richter, Werdermann & Gerbaulet

(57) **Zusammenfassung**

Die Dosierkappe (100) zur dosierten Abgabe von in einem Vorratsbehälter (32) angeordnetem fließfähigen Medium, wobei in der Dosierkappe (100) ein Z-förmiger Medienausgabeweg von einer Mündung (28), einem Einsatz (12), einer Prallwand (18), einer Gleitwand (24) und einer Schütte ausgebildet ist, wobei der Einsatz (12) und die Prallwand (18) eine Dosierkammer (14) ausbilden, ist zweiteilig als Kappe (10) und als in die Kappe (10) vorratsbehälterseitig einsteckbarer Becher (22) ausgebildet, wobei mit der Kappe (10) einstückig der Einsatz (12) ausgebildet ist, welcher in der Kappe (10) die Dosierkammer (14) und einen oberen Schüttenabschnitt (16) abtrennt, wobei ferner der Becher (22) kappenseitig einen in die Kappe (10) passenden Umfangsabschnitt (26) aufweist, wobei die Gleitwand (24) einstückig mit dem Becher (22) derart ausgebildet ist, daß die Gleitwand (24) einen vom Vorratsbehälter (32) abgeschlossenen und mit dem oberen Schüttenabschnitt (16) in Verbindung stehenden unteren Schüttenabschnitt (34) sowie in einem vorbestimmten Querschnittsbereich des Umfangsabschnittes (26) des Bechers (22) die Mündung (28) derart ausbildet, daß der Vorratsbehälter (32) mit der Dosierkammer (14) verbunden ist.

## Beschreibung

Die Erfindung betrifft eine Dosierkappe zur dosierten Abgabe von in einem Vorratsbehälter befindlichen fließfähigen Medium, wobei in der Dosiekappe ein Z-förmiger Medienausgabeweg von einer Mündung, einem Einsatz, einer Prallwand, einer Gleitwand und einer Schütte ausgebildet ist, wobei der Einsatz und die Prallwand eine Dosierkammer ausbilden, gemäß dem Oberbegriff des Anspruchs 1.

Bei der Anwendung von ätzenden oder aggressiven, schüttfähigen Wirkstoffen aus Vorratsbehältern ist es besonders wichtig, daß eine Überdosierung vermieden werden muß. Hierbei unterliegt man jedoch dem Problem, daß in der Regel einmal ausgeschütteter Wirkstoff nicht mehr in den Vorratsbehälter zurück gegeben werden kann. Beispielsweise bei Schüttstoffen zum Lösen und Durchgängigmachen von verstopften Abflüssen für Abwasser in Haushalten kann es bei einer Überdosierung des eingesetzten Produktes zu einer Überhitzung und damit zur Verformung von Kunststoffteilen des Abflusses oder sogar zum Verkochen bzw. Verspritzen kommen. Es besteht weiterhin die Gefahr, daß bei Überdosierung das Produkt aushärtet und den Abfluß blockiert. Dies ist jedoch aus Sicherheit- und Gesundheitsgründen unbedingt zu vermeiden.

Zur dosierten Abgabe von fließfähigen Medien ist bereits aus der DE 31 20 234 C2 ein Aufsatz für einen Vorratsbehälter bekannt, wobei innenseitig ein Z-förmiger Medienausgabeweg von einer Mündung, einem Einsatz, einer Prallwand, einer Gleitwand und einer Schütte ausgebildet ist. Die Prallwand geht in einem kehlförmigen Abschnitt in eine Schüttenwandung derart über, daß eine Dosierkammer ausgebildet ist. Ein die Mündung bildender Kanalabschnitt und der seitlich dazu in Ausgaberichtung versetzt liegende, eine Dosierkammer bildende Kanalabschnitt sind etwa querschnittsgleich gehalten. Die Prallwand ist als innenseitige Verlängerung der Kanalwand ausgebildet. Der Kanal und die Gleitwand sind einem Deckel und Einsatz vereinigenden, deckelförmig aufsetzbaren Kopfstück des Vorratsbehälters angeformt.

Es ist Aufgabe der vorliegenden Erfindung, eine Dosierkappe der obengenannten Art dahingehend zu verbessern, daß diese einfach und kostengünstig herstellbar ist und gleichzeitig eine einfache und betriebssichere Dosierung ermöglicht.

Diese Aufgabe wird durch eine Dosierkappe der o.g. Art mit den in Anspruch 1 gekennzeichneten Merkmalen gelöst.

Dazu ist es erfindungsgemäß vorgesehen, daß die Dosierkappe zweiteilig als Kappe und als in die Kappe vorratsbehälterseitig einsteckbarer Becher ausgebildet ist, wobei mit der Kappe einstückig der Einsatz ausgebildet ist, welcher in der Kappe die Dosierkammer und einen oberen Schüttenabschnitt abtrennt, wobei ferner der Becher kappenseitig einen in die Kappe passenden Umfangsabschnitt aufweist, wobei die Gleitwand einstückig mit dem Becher derart ausgebildet ist, daß die Gleitwand einen vom Vorratsbehälter abgeschlossenen und mit dem oberen Schüttenabschnitt in Verbindung stehenden unteren Schüttenabschnitt sowie in einem vorbestimmten Querschnittsbereich des Umfangsabschnittes des Bechers die Mündung derart ausbildet, daß der Vorratsbehälter mit der Dosierkammer verbunden ist.

Dies hat den Vorteil, daß durch die erfindungsgemäße Dosierkappe eine Überdosierung bei gleichzeitig einfacher Herstellbarkeit und Montierbarkeit sicher vermieden ist.

Vorzugsweise Weitergestaltungen der Vorrichtung sind in den Ansprüchen 2 bis 9 beschrieben.

Ein ruhiges und geführtes Fließen des Mediums von der Dosierkammer in den unteren Schüttenabschnitt ohne die Gefahr eines Überschwappens, so daß ggf. auch flüssige Medien dosierbar sind, erzielt man dadurch, daß am Einsatz vorratsbehälterseitig wenigstens ein, insbesondere zwei voneinander beabstandete, sich in den unteren Schüttenabschnitt des Bechers hinein erstreckender Wandabschnitt ausgebildet ist.

Für eine klemmende Halterung des Bechers in der Kappe sind zwei sich in den unteren Schüttenabschnitt des Bechers hinein erstreckende Wandabschnitte derart voneinander beabstandet ausgebildet, daß sie innenseitig an eine Wandung des eingesteckten Bechers anschlagen.

Zum Befestigen der Dosierkappe an dem Vorratsbehälter ist an letzterem ein sich außenseitig um den Becher herum bis in die Kappe erstreckender Anschlußstutzen ausgebildet, wobei zum Vermeiden von Toträumen der Becher mit seiner nicht die Gleitwand bildenden Wandung innenseitig an den Anschlußstutzen bündig anschlägt.

Zum Verschließen des Vorratsbehälters zwischen jeweiligen Anwendungen des Mediums weist die Kappe außenseitig an einem dem Vorratsbehälter abgewandten Ende ein Befestigungsmittel, insbesondere ein Gewinde, zum Befestigen, insbesondere zum Aufschrauben, einer Verschlußkappe auf. Dieser Verschluß macht ferner eine Feuchtigkeitsdichtung überflüssig.

Zum Schutz von Kindern vor unbeabsichtigtem Kontakt mit dem Medium weisen Kappe und Verschlußkappe ferner ein kindersicheres Befestigungsmittel auf.

In einer besonders bevorzugten Ausführungsform umfaßt das kindersichere Befestigungsmittel zwei an der Kappe außenseitig, gegenüberliegend und sich in Schließdrehrichtung der Verschlußkappe entlang des Umfangs der Kappe erhebend ausgebildete Rampen sowie zwei gegenüberliegende, an einer Innenseite der Verschlußkappe derart ausgebildete Erhebungen, daß diese beim Aufdrehen der Verschlußkappe auf die Kappe jeweils über eine Rampe gleiten und in Öffnungsdrehrichtung der Verschlußkappe an einer Stufe der Rampe anschlagen.

Für ein einfaches Öffnen des Vorratsbehälters durch einen Erwachsenen zur Anwendung des Mediums ist die Verschlußkappe derart flexibel ausgebildet, daß sich durch radiales Drücken auf den Umfang der Verschlußkappe die Erhebungen über die Rampen derart heben, daß die Verschlußkappe frei abschraubbar ist.

Hierzu sind zweckmäßigerweise am Umfang der Verschlußkappe an zwei gegenüberliegenden, um 90 Grad bzgl. der Erhebungen versetzten Stellen entsprechende Druckpunkte zum Lösen der Erhebungen vom Rampenanschlag ausgebildet.

Nachstehend wird die Erfindung anhand der beigefügten Zeichnungen näher erläutert. Diese zeigen in
- Fig. 1: eine bevorzugte Ausführungsform einer erfindungsgemäßen Dosierkappe in Schnittansicht,
- Fig. 2: in teilweise aufgebrochener perspektivischer Ansicht während des Ausschüttens eines Mediums,
- Fig. 3: in Seitenansicht während des Ausschüttens eines Mediums,
- Fig. 4: in Seitenansicht in aufrechtem Zustand,
- Fig. 5: eine Verschlußkappe der erfindungsgemäßen Dosierkappe in perspektivischer Ansicht und
- Fig. 6: eine Kappe der erfindungsgemäßen Dosierkappe in Aufsicht.

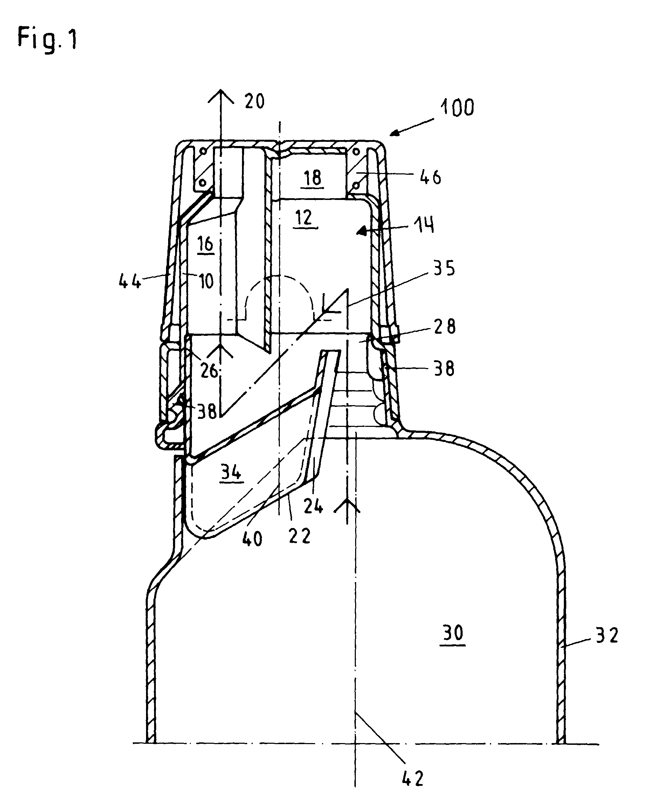

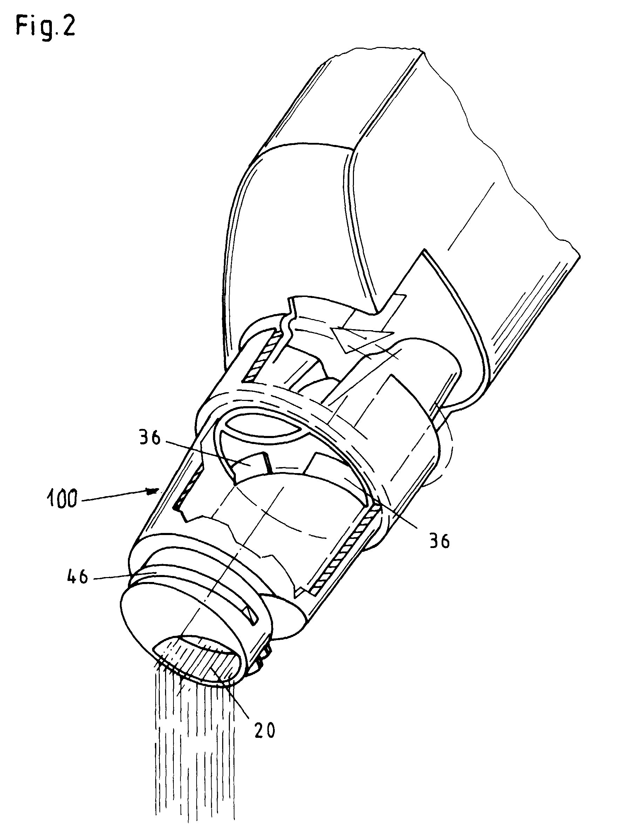

Die in Fig. 1 bis 4 dargestellte bevorzugte Ausführungsform einer erfindungsgemäßen Dosierkappe 100 umfaßt eine Kappe 10 mit einem einstückig mit der Kappe ausgebildeten Einsatz 12, welcher in der Kappe 10 eine Dosierkammer 14 und einen oberen Schüttenabschnitt 16 voneinander trennt. Die Dosierkammer 14 wird ferner von einer ebenfalls einstückig mit der Kappe 10 ausgebildeten Prallwand 18 begrenzt. Der obere Schüttenabschnitt 16 steht mit einer Schüttöffnung 20 in Verbindung. In die Kappe 10 einschiebbar ausgebildet ist ein Becher 22 vorgesehen. Einstückig mit dem Becher 22 ist eine Gleitwand 24 ausgebildet, welche in einem Umfangsabschnitt 26 des Bechers 22 eine Mündung 28 ausbildet. Über diese Mündung 28 steht ein Innenraum 30 eines Vorratsbehälter 32 mit der Dosierkammer 14 in Verbindung. Ferner begrenzt die Gleitwand 24 zusammen mit einem übrigen Wandabschnitt des Bechers 22 einen unteren Schüttenabschnitt 34, welcher vom Innenraum 30 des Vorratsbehälters 32 abgeschlossen ist und statt dessen mit dem oberen Schüttenabschnitt 16 und der Dosierkammer 14 in Verbindung steht. Von dem Einsatz 12 erstrecken sich in Richtung des Bechers 22 und in diesen hinein zwei voneinander beabstandete Wandungen 36 (Fig. 2), welche bei in die Kappe 10 eingestecktem Becher 22 an gegenüberliegenden Innenseiten einer Becherwandung derart anschlagen, daß der Becher 22 klemmend an der Kappe 10 gehaltert ist.

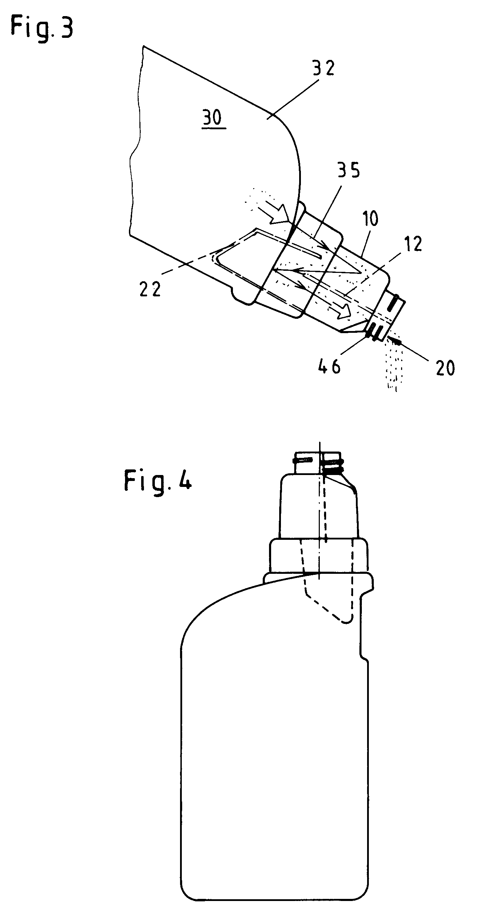

Die Mündung 28, die Prallwand 18, die Dosierkammer 14, der Einsatz 12, der untere Schüttenabschnitt 34 und der obere Schüttenabschnitt 16 definieren einen Z-förmigen Ausgabeweg für ein in den Vorratsbehälter 32 eingefülltes fließfähiges bzw. schüttfähiges Medium. Dieser Z-förmige Weg ist mit Pfeil 35 in Fig. 1 und 3 angedeutet. Die Dosierkappe 100 ist auf einen Anschlußstutzen 38 des Vorratsbehälters 32 derart aufgesetzt, daß eine Mittelachse 40 parallel und seitlich versetzt bzgl. einer Mittelachse 42 des Vorratsbehälters 32 angeordnet ist (Fig. 1). Zum Verschließen der Anordnung ist ferner eine Verschluß- oder Schutzkappe 44 vorgesehen, welche auf ein Gewinde 46 an der Kappe 10 aufschraubbar ist.

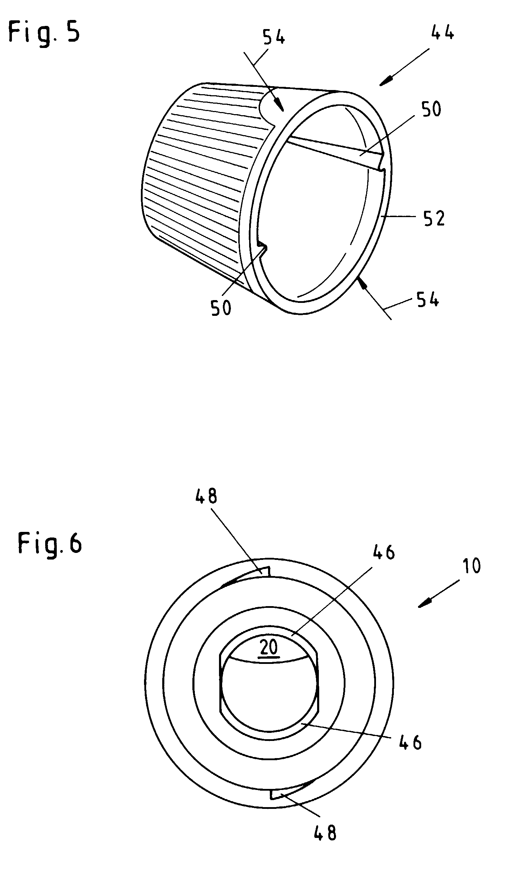

Die Kappe weist außenseitig, wie insbesondere aus Fig. 6 ersichtlich, zwei gegenüberliegende Rampen 48 auf, die sich in Schließdrehrichtung der Schutzkappe 44 erheben. Die Schutzkappe weist, wie aus Fig. 5 ersichtlich, entsprechende Erhöhungen 50 an einer Innenseite ihrer Wandung 52 auf. Bei Aufschrauben der Schutzkappe 44 auf die Kappe 10 gleiten diese Erhöhungen 50 über die Rampen 48 und schlagen in Öffnungsdrehrichtung gegen die Rampen 48, so daß die Schutzkappe 44 nicht durch einfaches Drehen abnehmbar ist. Drückt man jedoch gemäß Fig. 5 die Schutzkappe 44 in Pfeilrichtung 54 zusammen, so deformiert sich die vorzugsweise aus Kunststoff gefertigte Schutzkappe 44 derart, daß die Erhöhungen 50 außer Eingriff mit den Rampen 48 kommen und die Schutzkappe 44 abschraubbar ist. Dies stellt eine einfache und wirkungsvolle Kindersicherung zur Verfügung, wobei gleichzeitig ein Erwachsener mit entsprechend größeren Händen die Schutzkappe durch gleichzeitiges Drehen und Zusammendrücken in der vorgenannten Weise öffnen kann.

Der Anwendungsvorgang, d.h. ein dosiertes Ausschütten des Mediums ergibt sich insbesondere anhand der Fig. 2 bis 4. In einem einmaligen Ausgangszustand steht der mit einem Medium, wie beispielsweise einem abflußfreimachenden Produkt, gefüllte Vorratsbehälter 32, wie in Fig. 4 dargestellte, aufrecht und die Dosierkammer 14, wie auch der untere Schüttenabschnitt 34, ist leer. Neigt man nun den Vorratsbehälter 32, wie in Fig. 2 und 3 veranschaulicht, nach vorne, so füllt sich die Dosierkammer 14 geführt durch die Gleitwand 24 durch die Mündung 28 mit dem Medium. Bei Wiederaufrichten des Vorratsbehälters 32 fällt lediglich das in der Dosierkammer 14 vorhandene Medium unter dem Einfluß der Schwerkraft in den unteren Schüttenabschnitt 34. Bei erneutem Neigen des Vorratsbehälters 32, wie in Fig. 2 und 3 dargestellt, fällt das in dem unteren Schüttenabschnitt 34 befindliche Medium durch den oberen Schüttenabschnitt 16 und die Öffnung 20 heraus. Gleichzeitig wiederholt sich der oben erläuterte Vorgang des Befüllens der Dosierkammer 14 aus dem Innenraum 30 mit Medium über die Mündung 28, so daß sofort nach jeder Anwendung und anschließendem wieder Aufrichten des Vorratsbehälters eine frisch dosierte Menge Medium im unteren Schüttenabschnitt 34 zur Verfügung steht.

Auf diese Weise ermöglicht die Erfindung eine genau dosierte Mengenausgabe von beispielsweise pulvrigem oder körnigem Gut ggf. gleichzeitig mit einer Kindersicherung 48, 50 in Bezug auf die Schutzkappe 44.

Der Vorratsbehälter 32 ist beispielsweise zur Aufnahme von ätzenden, reizenden, giftigen und/oder aggressiven Produkten vorgesehen.

### BEZUGSZEICHENLISTE

- Dosierkappe: 100
- Kappe: 10
- Einsatz: 12
- Dosierkammer: 14
- oberer Schüttenabschnitt: 16
- Prallwand: 18
- Schüttöffnung: 20
- Becher: 22
- Gleitwand: 24
- Umfangsabschnitt: 26
- Mündung: 28
- Innenraum: 30
- Vorratsbehälter: 32
- unterer Schüttenabschnitt: 34
- Pfeil: 35
- Wandungen: 36
- Anschlußstutzen: 38
- Mittelachse der Dosierkappe: 40
- Mittelachse des Vorratsbehälters: 42
- Verschluß- oder Schutzkappe: 44
- Gewinde: 46
- Rampen: 48
- Erhöhungen: 50
- Wandung der Schutzkappe: 52
- Pfeilrichtung: 54

## Patentansprüche

1. Dosierkappe (100) zur dosierten Abgabe von in einem Vorratsbehälter (32) angeordnetem fließfähigen Medium, wobei in der Dosierkappe (100) ein Z-förmiger Medienausgabeweg von einer Mündung (28), einem Einsatz (12), einer Prallwand (18), einer Gleitwand (24) und einer Schütte ausgebildet ist, wobei der Einsatz (12) und die Prallwand (18) eine Dosierkammer (14) ausbilden,
dadurch gekennzeichnet,
daß die Dosierkappe (100) zweiteilig als Kappe (10) und als in die Kappe (10) vorratsbehälterseitig einsteckbarer Becher (22) ausgebildet ist, wobei mit der Kappe (10) einstückig der Einsatz (12) ausgebildet ist, welcher in der Kappe (10) die Dosierkammer (14) und einen oberen Schüttenabschnitt (16) abtrennt, wobei ferner der Becher (22) kappenseitig einen in die Kappe (10) passenden Umfangsabschnitt (26) aufweist, wobei die Gleitwand (24) einstückig mit dem Becher (22) derart ausgebildet ist, daß die Gleitwand (24) einen vom Vorratsbehälter (32) abgeschlossenen und mit dem oberen Schüttenabschnitt (16) in Verbindung stehenden unteren Schüttenabschnitt (34) sowie in einem vorbestimmten Querschnittsbereich des Umfangsabschnittes (26) des Bechers (22) die Mündung (28) derart ausbildet, daß der Vorratsbehälter (32) mit der Dosierkammer (14) verbunden ist.

2. Dosierkappe (100) nach Anspruch 1,
dadurch gekennzeichnet,
daß am Einsatz (12) vorratsbehälterseitig wenigstens ein, insbesondere zwei voneinander beabstandete, sich in den unteren Schüttenabschnitt (34) des Bechers (22) erstreckender Wandabschnitt (36) ausgebildet ist.

3. Dosierkappe (100) nach Anspruch 2,
dadurch gekennzeichnet,
daß zwei sich in den unteren Schüttenabschnitt (34) des Bechers (22) hinein erstreckende Wandabschnitte (36) derart voneinander beabstandet ausgebildet sind, daß sie innenseitig an eine Wandung (52) des eingesteckten Bechers (22) derart anschlagen, daß der Becher (22) klemmend in der Kappe (10) gehaltert ist.

4. Dosierkappe (100) nach einem der vorhergehenden Ansprüche,
dadurch gekennzeichnet,
daß am Vorratsbehälter (32) ein sich außenseitig um den Becher (22) herum bis in die Kappe (10) erstreckender Anschlußstutzen (38) ausgebildet ist, wobei der Becher (22) mit einer nicht die Gleitwand (12) bildenden Wandung innenseitig an den Anschlußstutzen (38) bündig anschlägt.

5. Dosierkappe (100) nach einem der vorhergehenden Ansprüche,
dadurch gekennzeichnet,
daß die Kappe (10) außenseitig an einem dem Vorratsbehälter (32) abgewandten Ende ein Befestigungsmittel, insbesondere ein Gewinde (46), zum Befestigen, insbesondere zum Aufschrauben, einer Verschlußkappe (44) aufweist.

6. Dosierkappe (100) nach Anspruch 5,
dadurch gekennzeichnet,
daß Kappe (10) und Verschlußkappe (44) ferner ein kindersicheres Befestigungsmittel (48,50) aufweisen.

7. Dosierkappe (100) nach Anspruch 6,
dadurch gekennzeichnet,
daß das kindersichere Befestigungsmittel folgendes umfaßt, zwei an der Kappe (10) außenseitig, gegenüberliegend und sich in Schließdrehrichtung der Verschlußkappe (44) entlang des Umfangs der Kappe (10) erhebend ausgebildete Rampen (48) sowie zwei gegenüberliegende, an einer Innenseite der Verschlußkappe (44) derart ausgebildete Erhebungen (50), daß diese beim Aufdrehen der Verschlußkappe (44) auf die Kappe (10) jeweils über eine Rampe (48) gleiten und in Öffnungsdrehrichtung der Verschlußkappe (44) an einer Stufe der Rampe (48) Anschlagen.

8. Dosierkappe (100) nach Anspruch 7,
dadurch gekennzeichnet,
daß die Verschlußkappe (44) derart flexibel ausgebildet ist, daß sich durch radiales Drücken auf den Umfang (52) der Verschlußkappe (44) die Erhebungen (50) über die Rampen (48) derart heben, daß die Verschlußkappe (44) frei abschraubbar ist.

9. Dosierkappe (100) nach Anspruch 8,
dadurch gekennzeichnet,
daß am Umfang (52) der Verschlußkappe (44) an zwei gegenüberliegenden, um 90 Grad bzgl. der Erhebungen (50) versetzten Stellen entsprechende Druckpunkte (54) zum Lösen der Erhebungen (50) vom Rampenanschlag ausgebildet sind.
